# EUROPEAN PATENT APPLICATION

(11) **EP 1 028 569 A2**
(43) Date of publication of application: **16.08.2000**
(21) Application number: 00301050.1
(22) Date of filing: 10.02.2000
(51) Int. Cl.: H04L 29/12, H04L 29/06, H04M 7/12, H04Q 7/22

(54) **Mobile Internet video telephony communications protocol**

(30) Priority: 10.02.1999 GB 9903028
(71) Applicant: Celestica Limited, Stoke-on-Trent, Staffs. ST7 1TL (GB)
(72) Inventor: Gilbert, Wayne, Stone, Staffordshire (GB); Newton, Andrew Torrance, Stoke on Trent, Staffordshire (GB)
(74) Representative: McLeish, Nicholas Alistair Maxwell

(57) **Abstract**

In a system for permitting video telephony, a first client (10) has a first computer (30) including a first microphone and miniature video camera, connected to a first cellular telephone (40). A second client (20) has a second computer (50) including a second microphone and miniature video camera, connected to a second cellular telephone (60). Audiovisual data captured by the first computer (30) are sent via the cellular network to a server (80) which includes a domain name server (DNS). The DNS dynamically allocates an IP address to the first client (10) in dependence upon the telephone number of that client's cellular telephone (40). The telephone number of the second client's telephone (60) is resolved by the DNS if he is connected to the system, otherwise a request for connection is sent to the second client (20). If accepted, a second IP address is allocated to the second client and bidirectional transfer of audiovisual data using the IP protocol can commence via the Internet.

## Description

This invention relates to a communications protocol, particularly, but not exclusively, for transmission of video data between mobile (cellular) telephones.

In recent years, video telephony has become popular particularly for business purposes. Transmission of video data requires a very high bandwidth to allow real time viewing of video images. A number of protocols, such as H.324, have been developed specifically to allow robust transmission of video data at a high rate along telephone cabling.

There are several problems with existing video telephony systems. Firstly, because the various protocols have been developed for dedicated video telephones, they do not readily work with other existing technology. Thus, for example, the H.324 video telephony protocol cannot be used with a standard personal computer and modem. Instead, a separate video telephone must be purchased, with consequent additional expense. Secondly, the relative lack of versatility of the protocols limits the ability to take advantage of increased bandwidth with the advent of faster telephony links.

Speed and other considerations have, until now, prevented the successful development of video telephony between mobile or cellular receivers and transmitters.

It is an object of the present invention to address these problems with the prior art.

According to one aspect of the present invention, there is provided a method of transmitting electronic data from a first apparatus to a second apparatus, the first apparatus including a first telecommunications device having a first telephone number allocated thereto, and the second apparatus including a second telecommunications device having a second telephone number allocated thereto, the method comprising the steps of converting the first telephone number into a first address, converting the second telephone number into a second address, transmitting electronic data from the first apparatus to the second apparatus, and labelling the data thus transmitted with the first address indicating the source of the data and with the second address indicating the destination of the data.

Thus, using this protocol, the first apparatus can communicate with the second apparatus without the need to set up complicated software programs operating on these apparatuses. Instead, a user of the first apparatus simply dials the telephone number into his apparatus. The protocol carries out conversion into a first address via which data can be sent to a second address, which in turn is converted back to the second telephone number.

For example, in a preferred embodiment of the invention, each address is an Internet Protocol (IP) address. This allows data to pass between the first apparatus and the second apparatus using the TCP/IP protocol. This protocol is well established and many widely available software routines have been written for it. For example, in one preferred embodiment, the electronic data to be transmitted may be compressed using available TCP/IP compression software.

Most preferably, the step of transmitting electronic data from the first apparatus to the second apparatus comprises converting the first telephone number into a first IP address sending data from the first apparatus to the first IP address labelling the data thus sent as originating from the first IP address converting the second telephone number into a second IP address sending the data labelled with the first IP address to the second IP address, and delivering the data from the second IP address to the second apparatus.

In a preferred embodiment, the method further comprises the steps of transmitting a first address request signal from the first telecommunications device to a server means, the first address request signal including information regarding both the first telephone number and the second telephone number, and converting, at the server means, the first telephone number into the first address whereby electronic data subsequently transmitted to the second apparatus from the first apparatus may be labelled as having originated from the said first address.

Preferably, the method then comprises transmitting a connect request signal from the server means to the second telecommunications device in response to receipt of the first address request signal; and, transmitting a connect reply signal from the second telecommunications device to the server means to permit establishment of a connection between the second telecommunications device and the first telecommunications device via the server.

Rather than maintaining a tied or permanent link between the first and second apparatuses, it is advantageous to establish a link by connecting only when the first apparatus requests a connection to the second apparatus.

Most preferably, the step of transmitting a connect reply signal further includes transmitting a second address request signal from the second telecommunications device to the server means, the second address request signal including information regarding the second telephone number. Then optionally, in response to receipt of the second address request signal, the server means converts the second telephone number into the said second address, such that, in response to a request by the first apparatus to send data to the second apparatus, a path of communication is established between the first address and the second address for transmission of data.

In this example, a second address for the second apparatus is only established once the first apparatus has indicated that a connection is desired.

Optionally, the method also comprises transmitting electronic data from the second apparatus to the first apparatus, the data thus transmitted being labelled by the second address indicating the source of the data and being labelled by the first address indicating the destination of the data.

Preferably, the step of converting the first telephone number into a first address includes storing a plurality of addresses; and temporarily allocating the first address to the first apparatus, the first address being selected from said plurality of addresses.

Dynamically allocating the addresses rather than permanently assigning a fixed address to a given apparatus provides two advantages. Firstly, the total number of addresses required is less, as addresses need only be allocated when the apparatuses wish to connect. Thus, when more than two apparatuses subscribe to a network, it is more efficient to have a smaller number of addresses assignable, when needed, to a larger total number of apparatuses which could be connected if desired. Furthermore, if IP addresses are used, then techniques that have previously been developed for other applications may be employed.

In a particularly preferred embodiment, the plurality of addresses are stored in the server, the first address being temporarily allocated in response to receipt of the said first address request signal.

The second address may also be dynamically allocated. For example, the step of converting the second telephone number into a second address may include storing a plurality of addresses; and temporarily allocating the second address to the second apparatus, the second address being selected from said plurality of addresses.

Preferably, the method includes ascertaining whether an address has already been temporarily allocated to the second apparatus; and temporarily allocating the second address to the second apparatus only if it is determined that no other address is currently allocated thereto.

It is possible, when the first apparatus wishes to connect to the second, that the second apparatus is already connected (for example to a third apparatus) and hence the second apparatus already has an address assigned to it. The server (for example) therefore checks to ascertain whether an address has already been temporarily assigned to the second apparatus. If so, no further temporary assignment is necessary.

Preferably, the first and second addresses are each selected from a common pool of a plurality of addresses.

The invention is particularly suitable for sending video images. For example, the first apparatus may further include first means for capturing an image and the second apparatus further includes first means for displaying an image, the method further comprising generating video data representative of an image captured by the first means for capturing an image, transmitting the video data from the first apparatus to the second apparatus, and displaying on the first means for displaying an image, an image derived from the video data.

Thus, rather than using the relatively inflexible H.324 video telephony protocol, the invention in its preferred form allows the use of the Internet Protocol which has very well defined and available compression techniques. Nonetheless, using telephone numbers allows direct connection between one apparatus and another in the same way in which video telephones may be connected. That is, the first apparatus can simply dial the telephone number of the second apparatus and the protocol will handle the transmission of data via the TCP/IP protocol.

Of course, the protocol allows two-way data transmission. Thus, preferably, the first apparatus also includes second means for displaying an image, and the second apparatus also includes second means for capturing an image, the method further comprising generating video data representative of an image captured from the second means for capturing an image transmitting the video data from the second apparatus to the first apparatus, and displaying, on the second means for displaying an image, an image derived from the video data.

Preferably, the first and second telecommunications devices each include a mobile or cellular telephone. The present invention thus provides the capability of video telephony even between mobile telephones, particularly if compressed TCP/IP is used. Rather than using a laptop or other portable computer attached to the mobile telephone, a unitary construction with a camera and screen built into a mobile telephone is feasible.

The invention also extends to a system comprising a first apparatus including a first telecommunications device having a first telephone number allocated thereto, a second apparatus including a second telecommunications device having a second telephone number allocated thereto, means for converting the first telephone number into a first address, and means for converting the second telephone number into a second address electronic data being transmitted from the first apparatus to the second apparatus by labelling the data with the first address indicating the source of the data, and labelling the data with the second address indicating the destination of the data.

Advantageous features of this system are set out in the claims appended hereto. The advantages are generally as set out above.

According to a third aspect of the present invention, there is provided a method of transmitting electronic data from apparatus including a first telecommunications device having a first telephone number allocated thereto, the method comprising the steps of converting the first telephone number into a first address, and transmitting electronic data from the apparatus: and labelling the transmitted data with the first address.

The use of a telephone number as an identifier for an apparatus including a telecommunications device provides the advantage that the setting up of any software operating on the apparatus is facilitated.

Further advantageous features of the third aspect of the invention are also set out in the appended claims.

The invention may be put into practice in a number of ways, one of which will now be described by way of example only and with reference to the following drawings in which:
Figure 1 shows a schematic block diagram of a system according to one embodiment of the present invention; and
Figures 2A-2C show a flow chart of the protocol for transmission of data in the system of Figure 1.

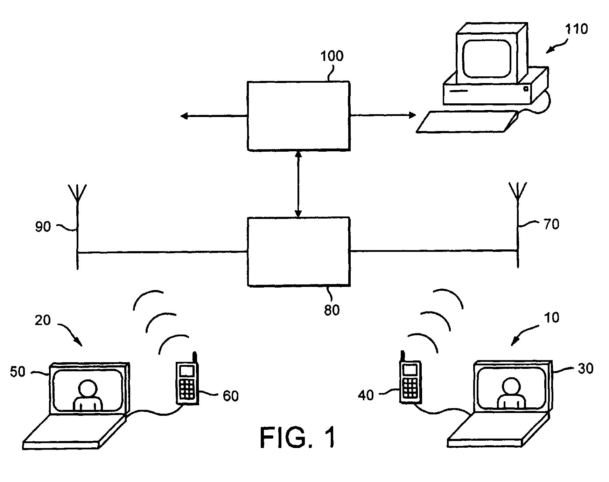

Referring first to Figure 1, a system embodying the present invention is shown. The system comprises, in its most basic form, a first client 10 and a second client 20. The first client 10 comprises a first computer 30, such as a laptop computer or other portable device, connected to a first mobile or cellular telephone either using a cellular telephone modem, such as a PCMCIA modem, or through an infra-red link. Such techniques for connecting a computer to a mobile telecommunications device will be well known to those skilled in the art and will not be detailed further.

In the preferred embodiment, the first computer 30 also contains a miniature video camera and microphone (not shown for clarity). Again, such devices are established in the art and will be well known to the skilled reader.

The second client 20 comprises a second computer 50, which again is preferably a laptop or other portable computer, and a second mobile or cellular telephone 60. As with the first client 10, the second computer 50 is connected to the second mobile phone 60 via a modem or the like. The second computer 50 contains a miniature video camera and microphone, again not shown.

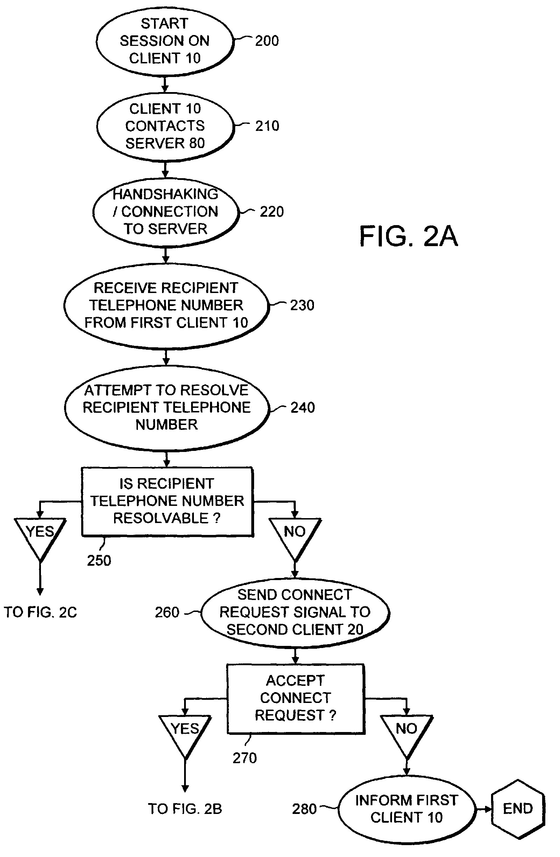

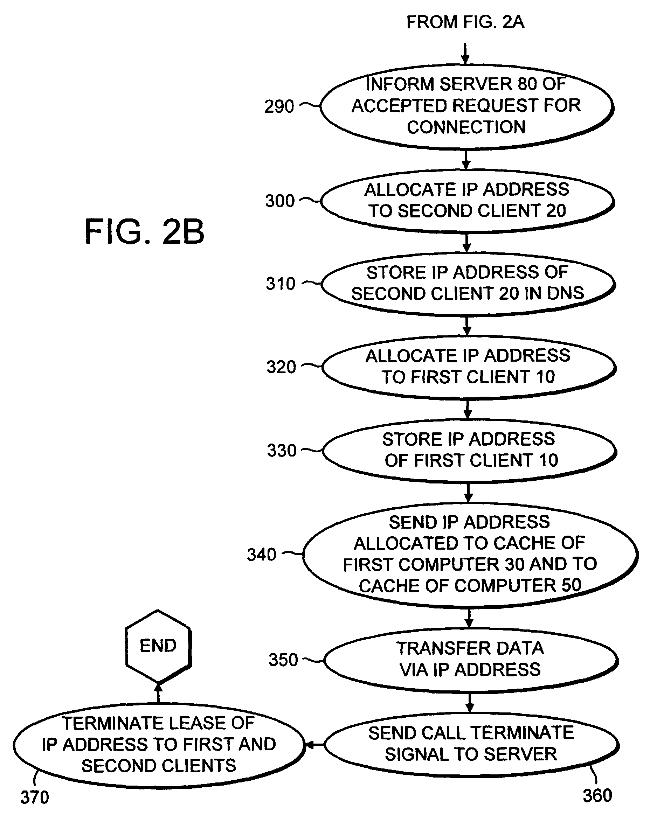

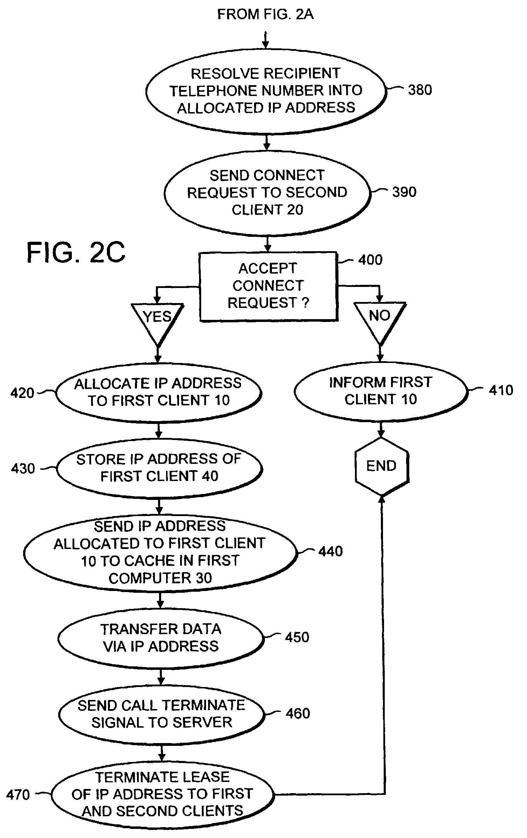

The particular manner in which the first and second clients 10, 20 connect to one another will be described in more detail with reference to Figures 2A to 2C. However, a brief description of the physical connection between the first client and second client will now be made, still referring to Figure 1.

Both the first computer 30 and the second computer 50 have, operating thereon, a computer program which allows capture of audio and video data from the microphone and miniature video camera respectively. As will be explained in further detail below, the invention allows any suitable program to be used, and, importantly, the program used to capture audio/video data from the microphone/miniature video camera of the first computer 30 need not be the same as the computer program carrying out this function on the second computer 50. This is because the protocol used to transfer the data between the two clients 10, 20 operates at a level lower than the audio/video data capture program, that is, the protocol is platform independent.

Likewise, both the first computer 30 and the second computer 50 include a further computer program which allows playback of received audio/video data sent by the respective other client. Once again, the skilled person will appreciate that the specific playback program is not critical to the operation of the system shown in Figure 1, and indeed different playback programs can be used on the first and second computers 30, 50 respectively.

As well as the audio/video capture programs and audio/video playback programs, each of the first and second computers 30, 50 also require telecommunications software to allow transmission and reception of electronic data. Again, a feature of the system of Figure 1 is that no specific program is necessary for successful operation. For example, the communications software which is part of the Windows® CE operating environment for PDAs is particularly suitable.

To establish a connection between the first and second clients 10, 20, one of the clients initiates a call. For ease of explanation, in the following it is assumed that the first client 10 initiates a call to the second client 20, although it will be appreciated that either client can initiate a call to the other client. A call is initiated by the first client 10 simply by entering, in the telecommunications program operating on the first computer 30, the telephone number of the second mobile telephone 60 which is part of the second client 20. Once the telephone number of the second mobile telephone 60 has been entered, the system connects the first client 10 to the second client 20 as follows.

Firstly, the first mobile telephone 40 transmits a signal to a first cellular base station 70, which represents the closest cellular base station on the network to which the first mobile telephone 40 subscribes. The first cellular base station 70 is connected, preferably via a dedicated telecommunications cable such as an optical fibre, to a cellular network server 80. The cellular network server 80 receives the signal transmitted by the first mobile telephone 40 and, in response to that signal, forwards it to a second cellular base station 90. The second cellular base station 90 represents that cellular base station which is closest to the second client 20. From the second cellular base station 90, a signal is broadcast to the second mobile telephone 60 where it is received and passed to the operating system of the second computer 50. In such a manner, a physical connection is established between the first and second clients 10, 20.

Although the system is particularly suitable for connecting two clients having mobile telephones each connected to the same network service provider, the system of Figure 1 also allows connection to other computers not connected directly to that network. For example, the server 80 may determine that the telephone number of the recipient, received as part of the signal sent by the first client 10 via the first cellular base station 70, is not a telephone number of a subscriber to that network. The server 80 then forwards the signal to a gateway 100 which sends the signal to another computer 110, for example, which has an address and telephone number outside of the cellular network to which the first and second clients 10, 20 are attached.

Having provided a broad overview of the physical components of the system, a more detailed description of the protocol for connecting the first and the second clients 10, 20 will now be given, with reference to Figures 2A to 2C, which are flow diagrams.

At step 200 in Figure 2A, a session is initiated by the first client 10, by dialling the telephone number of the second mobile telephone 60 which is part of the second client 20.

At step 210, the first mobile telephone 40 then contacts the server 80 via the first cellular base station 70. At step 220, the server 80 receives the connection request signal from the first client 10 and transmits a handshaking signal back to that first client 10. Once handshaking is complete, a connection is established between the first client 10 and the server 80.

At step 230, the server 80 receives from the first client 10, the recipient telephone number. In the present example, this is the telephone number of the second mobile telephone 60 which is part of the second client 20.

The server 80 includes a domain name server (DNS) which functions as a look-up table to convert a label in one form into a label having a different form. For example, the standard form of Internet Protocol (IP) address is of the form abc.def.ghi.jkl, where a-l are numerals. As such addresses are not particularly memorable for users, alphanumeric characters are instead used as addresses (such as Jones@Smith.com). A domain name server converts the alphanumeric form of the address into an IP address.

In its most basic form, a domain name server contains a fixed list of IP addresses cross-referenced to a fixed list of alphanumeric addresses. The server 80 of the present system, however, uses dynamic allocation of IP addresses. For example, the server may use the dynamic host configuration protocol (DHCP), as defined in RFC 2131. Here, rather than using a domain name server whose look-up table contains a fixed array of IP addresses permanently cross-referenced to a fixed array of alphanumeric addresses, instead a pool of Internet addresses is stored in a memory within the server 80 for allocation only when required.

In contrast to other domain name servers, the DNS of the server 80 in Figure 1 cross-references standard IP addresses which are dynamically assigned, when required, to the telephone number of a mobile telephone. Thus, when the first client 10 initiates a session, the domain name server within the server 80 can cross-reference both the telephone number of the first mobile telephone 40 and the telephone number of the second mobile telephone 60 to corresponding IP addresses which it allocates. This principle will be described in further detail below.

Returning now to Figure 2A, at step 240 the domain name server within the server 80 attempts to resolve the telephone number of the recipient (i.e., the telephone number of the second mobile telephone 60). If the second mobile telephone 60 is already connected to server 80, for example if it is already connected to a further client (not shown) on the network, then the domain name server will already have temporarily allocated or "leased" an IP address to the second client 20, as explained below. If, on the other hand, the second client 20 subscribes to the network but is not currently connected, then no IP address will currently be leased to the second client 20 and no entry will therefore be found in the domain name server of the server 80. At step 250 in Figure 2A, the server accordingly reads the look-up tables of the domain name server to ascertain whether an IP address is currently leased to the second client 20, in response to the connection request from the first client 10.

If the server determines that the second client 20 does not currently have an IP address leased to it, and is not therefore currently connected to the system, then at step 260, the server 80 sends a connect request signal to the second client 20. This is sent via the second cellular base station 90 to the second mobile telephone 60. At step 270, the user of the second client 20 decides whether to accept the request for a connection. If the user of the second client 20 decides not to accept the request, then a signal is sent back to the server 80 informing it of this. At step 280, the server 80 then informs the first client 10 that a request for connection has been refused, and the procedure terminates. If, on the other hand, the second client accepts the request for connection, then the procedure for connection continues.

Referring to Figure 2B, the procedure when a request for connection is accepted is shown. At step 290, the second client 20 informs the server 80 that a request for connection has been accepted. Upon receipt of a request accept signal, therefore, the DNS in the server 80 allocates an IP address selected from the pool of available IP addresses, to the second client 20. This is shown at step 300 in Figure 2B.

At step 310, once the IP address for the second client 20 has been allocated by the DNS, it is stored in a look-up table. The look-up table allows cross-referencing of the allocated IP address to the telephone number of the second mobile telephone 60 in the second client 20.

Following allocation and storage of the IP address of the second client 20, the DNS next allocates a different IP address to the first client 10, at step 320. Again, the IP address is selected from the pool of IP addresses available in the server 80, but of course the IP address allocated to the first client 10 differs from that allocated to the second client 20. At step 330, the IP address of the first client 10 is also stored in a look-up table to allow cross-referencing of the telephone number of the first mobile telephone 40 with the allocated IP address of the first client 10.

At step 340, the server transmits a signal both to the first client 10 and to the second client 20. This informs each client of the IP address which has been allocated to it. The first client 10 receives the signal transmitted by the server 80, and stores the IP address which has been allocated to it in a cache which may be located, for example, within the memory of the first computer 30. Likewise, the IP address allocated to the second client 20 is received by the second client from the server 80 and is stored in a cache within the memory of the second computer 50. Caching the allocated IP addresses allows the overall data transmission speed between the clients to be increased.

Once the caching of the addresses has been completed, the communications link between the first and second clients 10, 20 has been established and data transmission may commence, as shown at step 350. Whilst any suitable data may be transmitted at this stage, the system is particularly suitable for transmitting audio/video data. For example, the first computer 30 may obtain data representative of video images captured by the miniature video camera associated therewith. The software operating upon the first computer 30 converts this video data into any suitable format., For example, the video data may be encoded using MPEG-II. Most preferably, this video data is further compressed using compression software which is widely available. Following compression, the data is converted into Transmission Control Protocol/Internet Protocol (TCP/IP) packets which are transmitted via the mobile telephone network to the server 80. The TCP/IP packets sent from the first client 10 are, at this stage, labelled with the telephone number of the first mobile telephone 40.

Upon receipt at the server 80, the telephone number label is resolved in the DNS to provide a source label in standard IP format. The TCP/IP packets of video data received from the first client 10 are also labelled with the destination telephone number, i.e. the telephone number of the second mobile telephone 60. Again, the DNS resolves the destination telephone number by reading the look-up table of the DNS. Thus, for at least part of the signal, the TCP/IP packets are labelled with both the source and the destination address in standard IP format.

Referring once more to Figure 2B, at step 360, when it is desired to terminate the link, a call terminate signal is sent to the server 80. Either the user of the first client 10 or the user of the second client 20 may initiate call termination. For example, if the user of the second client 20 wishes to terminate the link, then the second client sends a call terminate signal to the server 80.

At step 370, when the server 80 receives the call terminate signal, it acknowledges the call terminate signal by sending a call terminate acknowledge signal to the client which initiated it. Preferably, the server also informs the other client (which did not initiate call termination) that call termination is imminent. Finally, the server terminates the lease of IP addresses to both the first and the second clients 10, 20. At this point, the IP addresses previously leased to the first and second clients become available for other clients which subsequently connect to the system to be allocated those IP addresses. After this, the link ends.

Referring finally to Figure 2C, the method of connection and disconnection when the recipient client (in the described example, the second client 20) is already connected to the server is described. At step 380, the DNS resolves the recipient telephone number into the IP address which has already been allocated, i.e. the IP address allocated to a second client 20 because it is already connected to the network. Once the server has resolved the recipient telephone number into the allocated IP address, it sends a connect request signal to the recipient client, i.e. the second client 20. This occurs at step 390 in Figure 2C.

At step 400, the user of the second client 20 decides whether to accept or refuse the request for a connection. If the user decides to decline a request for connection, then a signal indicating refusal is sent back to the server 80. At step 410, the server 80 resolves the telephone number of the mobile telephone from which the initial connect request was made, i.e. the first mobile telephone 40 which is part of the first client 10, and then sends a signal to that client informing it that its request for connection has been declined. The connection then terminates.

If, on the other hand, the user of the second client 20 accepts the request for connection, then the server 80 is again in formed of this decision by the second client 20. At step 420, the first client 10 is then allocated a temporary IP address by the server 80. This IP address is stored in the domain name server in the form of a look-up table which cross-references the allocated IP address to the telephone number of the first client 10. This is shown in Figure 2C at step 430.

At step 440, the IP address which has been allocated to the first client 10 is sent to the first client 10 where it is stored in a cache in the memory of the first computer 30. As previously described, this improves the ultimate transfer speed.

Following caching of the IP address allocated to the first client 10, data transfer via the IP addresses allocated to the first and second clients may commence, exactly as described above. This is shown at step 450. Again, as previously, when it is desired to terminate the connection, one or other of the connected clients sends a call terminate signal to the server, which acknowledges receipt of this, informs the other of the two connected clients and then terminates the lease of IP addresses to both the first and the second clients. After that, the connection is terminated.

The advantage of using TCP/IP rather than, for example video telephony protocols is that the TCP/IP protocol is very well developed, with a large volume of software having been written for it. Furthermore, the TCP/IP protocol has a relatively robust error checking system to ensure correct delivery of PCT/IP packets from source to destination, even with data compression.

Of course, data can readily be transmitted from the second client to the first client, simultaneously with transmission of data from the first client to the second client. In this manner, a "live" video link may be established between the two clients. Importantly, this video link uses the TCP/IP protocol rather than specifically developed video telephony protocols. In addition to the possibility of taking advantage of data compression and other utilities already developed for this protocol, it also permits the use of standard equipment which might be used for connection to the Internet, such as a standard laptop computer and mobile telephone. No additional software or hardware is necessary to obtain a high speed audio/video link. In addition, however, the system does not require complicated setting-up. Using a domain name server to resolve a telephone number into a dynamically allocated Internet address allows a user simply to dial the telephone number of an intended recipient instead.

Although the foregoing description has described the connection between first and second clients 10, 20, it will be readily appreciated that the system allows multiple connection at any one time. It is envisaged that many clients may subscribe to the system, although not all subscribed clients will wish to connect to other subscribed clients at the same time. It is for this reason that dynamic allocation of IP addresses is possible and advantageous.

Furthermore, although the system is particularly suitable for audio/video data transfer using a single server with all clients subscribing to a particular mobile telephone network, the system is equally employable for other purposes. For example, the advantage of the protocol described above, namely that special video telephony equipment does not need to be purchased, means that audio/video connection between two clients via a land line is still advantageous. Furthermore, in broader terms still, it is feasible and advantageous that a client connectable to the server 80 should be able to connect via the server 80 to Internet addresses external to the Intranet defined by the server 80 and the various clients which subscribe thereto. The domain name server allocates a temporary address to a client wishing to connected to an external Internet address, for example to send and receive e-mail, with resolution of that client's telephone number into an Internet address allowing relatively straightforward connection. In particular, the software operating on the client does not require complicated set-up procedures to be followed.

## Claims

1. A method of transmitting electronic data from a first apparatus to a second apparatus, the first apparatus including a first telecommunications device having a first telephone number allocated thereto, and the second apparatus including a second telecommunications device having a second telephone number allocated thereto, the method comprising the steps of:
converting the first telephone number into a first address;
converting the second telephone number into a second address;
transmitting electronic data from the first apparatus to the second apparatus; and
labelling the data thus transmitted with the first address indicating the source of the data and with the second address indicating the destination of the data.

2. The method of claim 1, further comprising the steps of:
transmitting a first address request signal from the first telecommunications device to a server means, the first address request signal including information regarding both the first telephone number and the second telephone number;
converting, at the server means, the first telephone number into the first address; and
labelling electronic data subsequently transmitted to the second apparatus from the first apparatus labelled as having originated from the said first address.

3. The method of claim 2, further comprising:
transmitting a connect request signal from the server means to the second telecommunications device in response to receipt of the first address request signal; and
transmitting a connect reply signal from the second telecommunications device to the server means to permit establishment of a connection between the second telecommunications device and the first telecommunications device via the server.

4. The method of claim 3, in which the step of transmitting a connect reply signal further includes transmitting a second address request signal from the second telecommunications device to the server means, the second address request signal including information regarding the second telephone number.

5. The method of claim 4, in which, in response to receipt of the second address request signal, the server means converts the second telephone number into the said second address, such that, in response to a request by the first apparatus to send data to the second apparatus, a path of communication is established between the first address and the second address for transmission of data.

6. The method of any one of claims 1 to 5, further comprising transmitting electronic data from the second apparatus to the first apparatus, labelling the data transmitted by the second address as being the source of the data, and labelling the data transmitted by the first address as being the destination of the data.

7. The method of any one of claims 1 to 6, in which the step of converting the first telephone number into a first address includes
storing a plurality of addresses; and
temporarily allocating the first address to the first apparatus, the first address being selected from said plurality of addresses.

8. The method of claim 7 when dependent upon any one of claims 2 to 6 , in which the plurality of addresses are stored in the server, the first address being temporarily allocated in response to receipt of the said first address request signal.

9. The method of any of claims 1 to 8 in which the step of converting the second telephone number into a second address includes
storing a plurality of addresses; and
temporarily allocating the second address to the second apparatus, the second address being selected from said plurality of addresses.

10. The method of claim 9, further including ascertaining whether an address has already been temporarily allocated to the second apparatus; and
temporarily allocating the second address to the second apparatus only if it is determined that no other address is currently allocated thereto.

11. The method of claim 10 or claim 9 when dependent upon claim 7 or claim 8, in which the first and second addresses are each selected from a common pool of a plurality of addresses.

12. The method of any of claims 1 to 11, in which the step of converting the first telephone number includes converting the telephone number into a first Internet Protocol (IP) address.

13. The method of claim 12, in which the step of converting the second telephone number includes converting the telephone number into a second Internet Protocol (IP) address.

14. The method of claim 13, in which the step of transmitting electronic data from the first apparatus to the second apparatus comprises:
converting the first telephone number into a first IP address;
sending data from the first apparatus to the first IP address;
labelling the data thus sent as originating from the first IP address;
converting the second telephone number into a second IP address;
sending the data labelled with the first IP address to the second IP address; and
delivering the data from the second IP address to the second apparatus.

15. The method of any of claims 1 to 14, in which the first apparatus further includes first image capturing means and the second apparatus further includes first image displaying means, the method further comprising:
generating video data representative of an image captured by the first image capturing means;
transmitting the video data from the first apparatus to the second apparatus; and
displaying, on the first image displaying means, an image derived from the video data.

16. The method of claim 7, in which the first apparatus also includes second image displaying means, and the second apparatus also includes second image capturing means, the method further comprising:
generating video data representative of an image captured from the second image capturing means;
transmitting the video data from the second apparatus to the first apparatus; and
displaying, on the second image displaying means, an image derived from the video data.

17. The method of any one of claims 1 to 16, in which the first and second telecommunications devices each include a mobile or cellular telephone.

18. A telecommunications system comprising:
a first apparatus including a first telecommunications device having a first telephone number allocated thereto;
a second apparatus including a second telecommunications device having a second telephone number allocated thereto;
means for converting the first telephone number into a first address; and
means for converting the second telephone number into a second address;
electronic data being transmitted from the first apparatus to the second apparatus by labelling the data with the first address indicating the source of the data, and labelling the data with the second address indicating the destination of the data.

19. The system of claim 18, further comprising server means arranged to receive a first request signal generated by the first apparatus identifying the telephone number thereof, the server means further being arranged to store the first address in a look-up table which cross-references the first telephone number to the first address.

20. The system of claim 19, in which the server means is further arranged to store the second address in the look-up table which further cross-references the second telephone number to the second address.

21. The system of claim 19 or claim 20, in which the server means is arranged to store a plurality of addresses and temporarily to allocate one of these stored addresses to the first apparatus as the first address in response to receipt of the first request signal.

22. The system of claim 21, in which the server means is further arranged temporarily to allocate a further one of the plurality of stored addresses to the second apparatus as the second address.

23. The system of claim 22, in which the first apparatus is arranged to generate a first request signal which further identifies the telephone number of the second apparatus, the server means temporarily allocating the second address to the second apparatus in response to receipt of the first request signal.

24. The system of claim 22, in which the first apparatus is arranged to generate a first request signal which further identifies the telephone number of the second apparatus, the server mean further being arranged to read the look-up table and temporarily to allocate a second address only if it is determined that one of the plurality of addresses is not already temporarily allocated to the second apparatus.

25. The system of any one of claims 18 to 24, in which the means for converting the first telephone number is arranged to convert that first telephone number into a first Internet Protocol (IP) address, and in which the means for converting the second telephone number is arranged to convert that second telephone number into a second IP address.

26. The system of claim 25 when dependent upon any of claims 19 to 24, in which the first apparatus is arranged to transmit electronic data using the Transmission Control Protocol/Internet Protocol (TCP/IP), the data being transmitted from the first apparatus to the server means where it is labelled with the first source IP address.

27. The system of claim 26, in which the second apparatus is arranged to receive electronic data using the TCP/IP Protocol from the server means where it has further been labelled with the second, destination IP address.

28. The system of any of claims 19, 20, 21, 22, 23, 24, 26 or 27, in which the first apparatus further comprises a first cache arranged to receive notification from the server means of the first address.

29. The system of claim 20, claim 21 or claim 22, in which the second apparatus further comprises a second cache arranged to receive notification from the server means of the second address.

30. The system of any one of claims 18 to 29, in which the first apparatus further includes first image capture means, and the second apparatus further includes first image display means, the first apparatus being arranged to generate video data representative of an image captured by the first image capturing means, the second apparatus being arranged to receive the video data and to display an image obtained therefrom on the first image display means.

31. The system of any one of claims 18 to 30, in which the first and second telecommunications devices each comprise a mobile (cellular) telephone.

32. A method of transmitting electronic data from apparatus including a first telecommunications device having a first telephone number allocated thereto, the method comprising the steps of:
converting the first telephone number into a first address; and
transmitting electronic data from the apparatus: and
labelling, the transmitted data with the first address.
